Europäisches Patentamt

European Patent Office

Office européen des brevets

(19)

(11) Veröffentlichungsnummer: **0 031 060**
**A1**

(12) # EUROPÄISCHE PATENTANMELDUNG

(21) Anmeldenummer: 80107659.7

(22) Anmeldetag: 05.12.80

(51) Int. Cl.³: **G 06 K 19/08**
**G 07 D 7/00**

(30) Priorität: **13.12.79 DE 2950174**

(43) Veröffentlichungstag der Anmeldung:
**01.07.81 Patentblatt 81/26**

(84) Benannte Vertragsstaaten:
**DE FR GB IT NL**

(71) Anmelder: **BASF Aktiengesellschaft**
**Carl-Bosch-Strasse 38**
**D-6700 Ludwigshafen(DE)**

(72) Erfinder: **Koester, Eberhard, Dr.**
**Max-Slevogt-Strasse 23**
**D-6710 Frankenthal(DE)**

(72) Erfinder: **Hack, Joachim**
**Pfarrer-Friedrich-Strasse 34**
**D-6700 Ludwigshafen(DE)**

(72) Erfinder: **Steuerwald, Manfred**
**Weidenstrasse 3B**
**D-6710 Frankenthal(DE)**

(54) Verfahren und Vorrichtung zur Echtheitsprüfung von Aufzeichnungsträgern, die gegen Fälschung zu sichern sind.

(57) Die Erfindung betrifft ein Verfahren und eine Vorrichtung zur Echtheitsprüfung von Aufzeichnungsträgern, die gegen Fälschung zu sichern sind und welche diskrete Bereiche eines magnetischen Materials mit Austauschanisotropie aufweisen, mittels Vergleich und Zuordnung einer durch vorgegebene und entgegengesetzte Magnetisierungsrichtungen ausgelösten und nach der Einwirkung eines vorbestimmten Temperaturzyklus und daran anschließend eines auf Null abklingenden magnetischen Wechselfeldes wegen des austauschanisotropen Verhaltens des magnetischen Materials verbleibenden Restmagnetisierung.

FIG.1

EP 0 031 060 A1

Verfahren und Vorrichtung zur Echtheitsprüfung von Aufzeichnungsträgern, die gegen Fälschung zu sichern sind

Die Erfindung betrifft ein Verfahren und eine Vorrichtung
zur Echtheitsprüfung von Aufzeichnungsträgern, die gegen
Fälschung zu sichern sind und welche diskrete Bereiche
eines magnetischen Materials mit Austauschanisotropie aufweisen, mittels Vergleich und Zuordnung einer durch vorgegebene und entgegengesetzte Magnetisierungsrichtungen
ausgelösten und wegen des austauschanisotropen Verhaltens
des magnetischen Materials verbleibenden Restmagentisierung.

Materialien und Verfahren zur Echtheitsprüfung von Dokumenten jeglicher Art, wie Scheckkarten, Ausweiskarten,
Banknoten u.ä. oder von magnetischen Aufzeichnungsträgern
sind schon mehrfach vorgeschlagen worden. Hierfür lassen
sich besondere magnetische oder magnetisierbare Materialien direkt oder in Form bestimmter Anordnungen einsetzen.

So ist aus der GB-PS 1 127 403 bekannt, in sogenannte
Sicherheitspapiere für Banknoten oder Schecks schon während der Papierherstellung Fäden aus oder mit ferromagnetischem Material einzuarbeiten. Der Nachweis der magnetischen Eigenschaften dieses Materials soll dann später
zur Identifikation dieses Sicherheitspapiers dienen. In
anderer Weise, nämlich durch Aufbringen eines Zeichens
oder Bildes mit Hilfe einer magnetischen Tinte im Tiefdruckverfahren auf das zu sichernde Dokument, soll gemäß
US-PS 3 599 153 eine Fälschung verhindert werden, da nach
einer Sättigung des magnetischen Materials in einem konstanten magnetischen Feld ein der variierenden Schichtdicke des Zeichens proportionales variierendes Signal
nachweisbar wird. Zur Sicherung von Dokumenten in Form
von magnetischen Aufzeichnungsträgern wird  in der

Sob/BL

GB-PS 11 331 604 vorgeschlagen, nadelförmige magnetische Partikel in ausgewählten, in Abstand zueinander angeordneten Bereichen einer Schicht aus solchen Partikeln in einer vorbestimmten Richtung fest zu orientieren, jedoch die Partikel im Restbereich der Schicht nicht zu orientieren oder sie in einer im wesentlichen dazu senkrechten Richtung zu orientieren. Solch eine Anordnung ist heute bekannt als magnetisches "Wasserzeichen". Demgegenüber ist in der US-PS 3 566 356 ein Sicherheitsdokument mit magnetischer Aufzeichnung offenbart, das eine oder mehrere Schichten eines zusammengesetzten magnetisierbaren Materials mit besonderen Hysteresismerkmalen aufweist. Die Überprüfung des Dokumentes auf Echtheit erfolgt durch Vergleichen der Signalansprache, wenn das Dokument der Einwirkung eines entmagnetisierenden Feldes ausgesetzt wird, mit einem vorherbestimmten Bereich von Signalwerten, die von den Hysteresismerkmalen des Materials abhängig sind. Nichtendgültige Daten können in dem Material unter Anwendung herkömmlicher Verfahren magnetisch aufgezeichnet werden. Bei einem solchen Dokument müssen jedoch, wie geschildert, besondere Kombinationen von magnetisierbaren Materialien verwendet werden.

In den US-PS 3 052 353 und 3 328 195 sind noch weitere andere mehrschichtige magnetische Aufzeichnungsmedien offenbart, die auf verschiedene Frequenzbereiche ansprechen oder bei denen in der einen Schicht eine leicht zu löschende kurzfristige Information und in der anderen Schicht eine schwer löschbare Information aufgezeichnet werden kann. Solche Medien können für Sicherheitsdokumente verwendet werden, wobei eine Echtheitsprüfung in der Weise erfolgen könnte, daß die Anwesenheit eines besonderen, feststehenden Informationsmusters, z.B. eines Kodemusters ermittelt wird, das in der für schwer löschbare Information vorgesehenen Schicht aufgezeichnet wird.

Jedoch kann auch in diesem Falle eine Fälschung des Dokumentes unter Anwendung herkömmlicher Aufzeichnungsverfahren in der Weise durchgeführt werden, daß ein solches aufgezeichnetes Informationskodemuster gelöscht oder verändert wird.

Neben den bereits geschilderten Mängel besitzen alle diese Verfahren außerdem den Nachteil, daß die benutzten ferro- oder ferrimagnetischen Materialien selbst unter Berücksichtigung der äußerst hochkoerzitiven Kobalt-Seltene Erden-Verbindungen leicht erhältlich oder aber entsprechend ersetzbar sind. Damit läßt sich aber die angestrebte Wirkung im Hinblick auf die Sicherung solcher Dokumente nicht zweifelsfrei erreichen.

Aus diesem Grunde ist auch schon vorgeschlagen worden (US-PS 3 883 892), magnetische Aufzeichnungsträger unter Verwendung von austauschanisotropem Material als sogenannte Dokumentenbänder herzustellen.

Magnetisches Material mit Austauschanisotropie besteht aus einem dünnen ferro- oder ferrimagnetischen Film, auf den ein antiferromagnetischer Film aufgebracht wurde oder aus kleinen ferro- oder ferrimagnetischen Teilchen, die mit einer dünnen Schicht eines antiferromagnetischen Materials überzogen sind. Die ferro- oder ferrimagnetische Ordnung wird oberhalb der Curie-Temperatur $T_c$ und die antiferromagnetische Ordnung oberhalb der Neel-Temperatur $T_N$ aufgehoben. Ist $T_c > T_N$, so behält das magnetische Material mit Austauschanisotropie die Richtung der Magnetisierung des ferro- oder ferrimagnetischen Teiles in Erinnerung, wenn es mit dieser Magnetisierung auf eine Temperatur $T_N < T_2 < T_c$ erwärmt und anschließend wieder auf eine tiefere Temperatur, z.B. die Raumtemperatur $T_1 < T_N < T_c$

abgekühlt wurde. Oft reicht es schon aus, wenn $T_2$ auch etwas unterhalb $T_N$ liegt. Der ferro- oder ferrimagnetische Anteil des Materials kann dann zwar bei $T_1$ beliebig oft mit einem großen magnetischen Feld in verschiedene Richtungen magnetisiert werden, setzt man es aber einem von großen Feldstärken langsam auf Null abnehmendem Wechselfeld aus, so wird es nicht wie normales magnetisches Material auf die Magnetisierung Null entmagnetisiert, sondern es bleibt je nach Ausführung des Materials mit Austauschanisotropie ein großer Bruchteil der ursprünglichen Magnetisierung in ihrer ursprünglichen Richtung übrig.

Fälschungen von Aufzeichnungen auf solchermaßen ausgestatteten Aufzeichnungsträgern sind damit nur noch möglich, wenn dieses magnetische Material auf Temperaturen in der Größenordnung der Néel-Temperatur erhitzt wird. Zur Sicherung gegen eine solche Temperaturerhöhung bzw. ihrer Anzeige bedarf es jedoch zusätzlich sogenannter irreversibler Thermoindikatoren. Wenn auch diese magnetischen Materialien mit Austauschanisotropie auf Grund ihrer besonderen Herstellungstechnik sowohl äußerst schwer erhältlich sind, als auch in ihren Eigenschaften ohne genaue Kenntnis der jeweiligen Verfahren nicht identisch vorliegen, so ist aber an diesem Verfahren zur Dokumentensicherung nachteilig, daß diese magnetischen Materialien keine optimalen Aufzeichnungseigenschaften besitzen und die vorhandenen Thermoindikatoren nicht voll den Anforderungen genügen.

Es bestand daher die Aufgabe, ein Verfahren und eine Vorrichtung zur Sicherung von Dokumenten bereitzustellen, das die geschilderten Nachteile vermeidet und unter Verwendung schwer erhältlich und duplizierbarer magnetischer Materialien an Aufzeichnungsträgern ohne zusätzliche

003 060

Hilfsmittel, wie Indikatoren oder weitere magnetische Materialien, die Echtheitsprüfung gestattet.

Es wurde nun gefunden, daß die Aufgabe mit einem Verfahren zur Echtheitsprüfung von Aufzeichnungsträgern, die gegen Fälschung zu sichern sind und welche mit diskreten Bereichen eines magnetischen Materials mit Austauschanisotropie, dessen Neel-Temperatur $T_N$ kleiner ist als die Curie-Temperatur $T_c$ des ferro- oder ferri-magnetischen Anteils versehen sind, gelöst werden kann, wenn man diese magnetisierbaren Bereiche des Aufzeichnungsträgers, die durch unmagnetische Bereiche voneinander getrennt sind, aufeinanderfolgend

(a) in einer Richtung magnetisiert,

(b) auf eine Temperatur $T_2$, welche kleiner $T_c$ und größer $T_{AFS}$ ist, erhitzt,

(c) auf eine Temperatur $T_1$, die kleiner $T_2$ ist, abkühlt,

(d) einem auf Null abklingenden magnetischen Wechselfeld aussetzt, dessen Feldstärke mindestens viermal so groß wie die Koerzitivfeldstärke des vorliegenden magnetischen Materials ist, und dann

(e) die Polarität der verbleibenden Magnetisierung bestimmt

sowie anschließend die Schritte (a) bis (e) mit einem zu (a) entgegengesetzten Magnetisierungsvorgang wiederholt, mit der Maßgabe, daß die Polarität der verbleibenden Magnetisierung entgegengesetzt zu der unter (e) ermittelten festgestellt wird.

Die erfindungsgemäße Vorrichtung zur Durchführung der Echtheitsprüfung enthält eine Anordnung an sich bekannter Mittel, um die im einzelnen aufgeführten Verfahrensschritte vornehmen zu können.

Mit Hilfe des erfindungsgemäßen Verfahrens und der entsprechenden Vorrichtung wird es möglich, das Vorhandensein eines magnetischen Materials mit Austauschanisotropie mit entsprechenden Eigenschaften einwandfrei nachzuweisen und somit einen gegenüber der Verwendung von sonstigen üblichen magnetischen Materialien erhöhten Schutz von Dokumenten gegen Fälschung zu erreichen.

Die Erfindung wird nachfolgend anhand von Zeichnungen und Beispielen näher erläutert. In der Zeichnung bedeuten:

Fig. 1
Draufsicht eines mit verschiednen Anordnungen von Bereichen mit austauschanisotropem Material versehenen und gegen Fälschung zu sichernden Aufzeichnungsträgers.

Fig. 2
eine schematische Darstellung der Vorrichtung zur Durchführung des erfindungsgemäßen Verfahrens.

Fig. 3
Draufsicht eines in den Beispielen eingesetzten Aufzeichnungsträgers

Fig. 4a und b
graphische Darstellung der Signalfolge bei Durchführung des erfindungsgemäßen Verfahrens gemäß Beispiel 1.

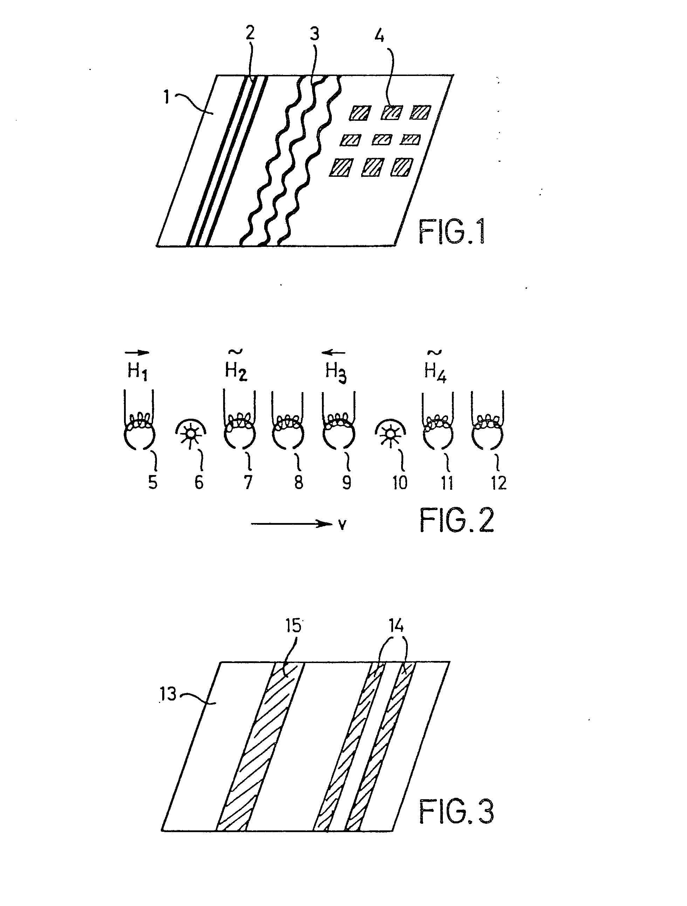

Figur 1 zeigt eine schematische Darstellung eines gegen Fälschung zu sichernden Dokuments 1, z.B. einer Banknote, einer Scheckkarte oder eines sonstigen Sicherheitspapiers, das Aufzeichnungen im weitesten Sinn aufweist. Dieses Dokument 1 trägt verschiedene, lediglich beispielhaft wiedergebenede Muster von Bereichen mit austauschanisotropem Material in Form von Streifen bzw. Fäden 2, Linien eines beliebigen Musters 3, oder sonstiger Flächen 4, wobei diese Bereiche jeweils durch unmagnetische Bereiche voneinander getrennt sind.

Das Herstellen dieser Bereiche mit austauschanisotropem Material erfolgt in bekannter Weise. So sind bereits eine Reihe entsprechender magnetischer Materialien sowohl in Teilchenform (US-PS 2 988 466, 3 959 032, 3 961 990) wie auch in Form einheitlicher Filme (DE-OS 24 05 623) beschrieben. Letztere können unmittelbar auf das gegen Fälschung zu sichernde Dokument aufgebracht werden. Jedoch dürfte dies selten sein, da der Herstellungsprozeß Verfahrensbedingungen einschließt, welche nicht für alle Unterlagen geeignet sind. Deshalb ist es empfehlenswert, die austauschanisotropen Materialien in Teilchenform einzusetzen und diese auf bekanntem Wege zu Tinten, Pasten oder selbsttragenden Bändern oder Flächen zu verarbeiten. Hierbei lassen sich die üblichen und mehrfach beschriebenen Techniken aus dem Gebiet der magentischen Druckfarben oder Aufzeichnungsträger heranziehen.

Ein auf diese Weise ausgestattetes Dokument wird nun in der in Fig. 2 mit v bezeichneten Richtung an der Vorrichtung zur Echtheitsprüfung mit den einzelnen Stationen 5 bis 12 mit gleichbleibender Geschwindigkeit vorbeigeführt. Dabei erhalten die Bereiche mit dem magnetischen Material zuerst durch den Magnetkopf 5, der ein magnetisches Feld der Stärke $H_1$ am Ort des Materials mit Austauschanisotropie erzeugt, eine Magnetisierung in gleicher Richtung. Daraufhin wird das Material unter der Wärmequelle 6 auf eine Temperatur $T_2$ erhitzt. Diese Temperatur $T_2$ muß kleiner als die Curie-Temperatur $T_c$ des magnetischen Materials und größer als $T_{AFS}$ sein, wobei die Temperatur $T_{AFS}$ kleiner als die Neel-Temperatur $T_N$ und gleich oder größer als diejenige Temperatur ist, bei der

die antiferromagnetische Achse unter dem Einfluß der vorhandenen remanenten Magnetisierung ohne den Einfluß eines äußeren magnetischen Feldes irreversibel gedreht wird. Vorzugsweise wählt man bei diesem Verfahrensschritt für $T_2$ eine Temperatur, die gleich oder nur wenig unterhalb von $T_N$ liegt. Nach diesem Aufheizen kühlen sich die Bereiche mit dem austauschanisotropen Material auf eine Temperatur $T_1$, die kleiner $T_{AFS}$ ist, üblicherweise auf Raumtemperatur ab. Durch diese Wärmebehandlung wird die Richtung der Magnetisierung des antiferromagnetischen Teils des magnetischen Materials entsprechend der Magnetisierung des ferro- oder ferrimagnetischen Teils ausgerichtet. Wirkt nun beim nächsten Verfahrensschritt der erfindungsgemäßen Echtheitsprüfung ein durch den Magnetkopf 7 erzeugtes Wechselfeld mit der Amplidude $H_2$, das langsam auf Null abklingt auf die Bereiche mit dem austauschanisotropen Material ein, so läßt sich mit dem Magnetkopf 8 ein Signal U nachweisen. Dieses Signal ist proportional dem Flußwechsel $d\phi/dt$, der beim Übergang von unmagnetischen Zwischenraum zwischen den genannten Bereichen zu den magnetischen Bereichen auftritt, da bei der Wechselfeldentmagnetisierung je nach Ausführung des Materials mit Austauschanisotropie ein großer Teil der ursprünglichen Magnetisierung in der ursprünglichen Richtung übrigbleibt. Anschließend wird der geschilderte Vorgang mit umgekehrten Vorzeichen wiederholt. Mit dem Magnetkopf 9 wirkt ein magnetisches Feld der Stärke $H_3$, jedoch mit entgegengesetzter Richtung zum Feld $H_1$, auf die Bereiche mit dem magnetischen Material ein. Dadurch wird der zuvor durch das abklingende Wechselfeld $H_2$ entmagnetisierte ferro- oder ferrimagnetische Teil nun in einer zu der zuvor durch den Magnetkopf 5 initiierten Magnetisierung entgegengesetzten Richtung magnetisiert. Nach dem sich wieder daran anschließenden Erwärmen des Materials auf eine Temperatur $T_2$ mit einer der Station 6 entsprechenden Wärme-

quelle 10 und dem darauffolgenden Abkühlen ist der antiferromagnetische Teil des Materials in gleicher Richtung zum ferro- oder ferrimagnetischen Teil orientiert, so daß nach dem Entmagnetisieren unter dem Magnetkopf 11 mit dem auf Null abklingenden Wechselfeld $H_4$ wieder der durch das Material mit Austauschanisotropie verursachte Teil der Magnetisierung verbleibt. Mit dem Lesekopf 12 wird dieser Teil dann bestimmt, dessen Betrag $d\phi/dt$ aufgrund des dem Feld $H_1$ entgegengesetzten Feld $H_3$ nun negativ ist. Durch die entgegengesetzte Polarität der Signale der Leseköpfe 8 und 12, die durch übliche Schaltungstechniken nachgewiesen werden kann, ist das Vorhandensein eines magnetischen Materials mit Austauschanisotropie belegt. Als Referenz für die Bestimmung der Polarität kann eine zusätzliche magnetische Markierung aus magnetisiertem Cobalt-Seltene Erden Magnetmaterial ($H_C \gg H_{CA}$) hilfreich sein.

Bei der Durchführung des erfindungsgemäßen Verfahrens ist der Betrag der magnetischen Felder $H_1$ bis $H_4$ nicht sehr kritisch, solange das Feld $H_2$ größer als $H_1$ und $H_4$ größer als $H_3$ ist. In bevorzugter Weise sind die Felder $H_1$ und $H_3$ gleich groß und entsprechen etwa dem dreifachen Wert der Koerzitivfeldstärke $H_{CA}$ des magnetischen Materials mit Austauschanisotropie, während die ebenfalls gleich großen Felder $H_2$ und $H_4$ die etwa vierfache Größe aufweisen. Die Felder $H_1$ und $H_3$ können außer durch Magnetköpfe herkömmlicher Art auch durch andere Anordnungen wie Permanentmagnete oder Magnetspulen erzeugt werden.

Die Wärmequellen 6 und 10 lassen sich mit Strahlungsheizern bzw. erwärmten Walzen oder Platten realisieren. Es ist jedoch wichtig, daß die Bereiche mit dem magnetischen Material die Produkttemperatur $T_2$ erreichen. Außerdem mag es bei der Durchführung des erfindungsgemäßen Verfahrens vorteilhaft sein, jeweils vor den Stationen 7 und 11,

Welche die Wechselfelder $H_2$ und $H_4$ erzeugen, die magnetischen Bereiche des zu prüfenden Dokuments durch Kontakt mit entsprechenden Walzen oder Platten zu kühlen, um dadurch die Temperatur $T_1$ schneller zu erreichen.

Mit dem erfindungsgemäßen Verfahren und der entsprechenden Vorrichtung läßt sich eindeutig das Vorhandensein eines magnetischen Materials mit Austauschanisotropie nachweisen und durch Einstellen der speziellen Parameter, d.h. der Temperaturen und der magnetischen Felder, das spezielle Material zweifelsfrei identifizieren. Das zusätzliche Anbringen eines Codes, sei es in Form einer besonderen Rasterung der Bereiche mit dem magnetischen Material oder in Form zusätzlicher Merkmale, mag zweckmäßig sein, ist aber für das erfindungsgemäße Verfahren nicht ausschlaggebend.

Die Erfindung wird anhand folgender Beispiele näher erläutert. Im Vergleich zum erfindungsgemäßen Beispiel 1 zeigt Beispiel 2, daß die Anwendung eines üblichen ferro- oder ferrimagnetischen Materials mit einer Koerzitivfeldstärke, die kleiner oder gleich derjenigen des Materials mit Austauschanisotropie ist und für das die Vorrichtung zur Echtheitsprüfung ausgelegt ist, kein Signal zeigt und Beispiel 3, daß die Verwendung eines Materials mit einer vergleichsweise sehr hohen Koerzitivfeldstärke aber auch ohne Anteil einer antiferromagnetischen Phase, Signale gleicher Polarität ergibt.

## Beispiel 1

Ein magnetisches Material mit Austauschanisotropie, bestehend aus kleinen Teilchen mit einem Kern aus einer Legierung von 65 % Co und 35 % Ni und einer oberflächlichen Oxidschicht aus 65 % CoO und 35 % NiO, wird in einem

0031560

gelösten Bindemittel auf der Basis eines partiell verseiften Vinylchlorid - Vinylacetat - Copolymerisates dispergiert, auf eine Polyesterfolie aufgetragen und getrocknet. Das so erhaltene Band hat eine Remanenz $B_r$ von 0,13 T, eine Koerzitivkraft $H_{CA}$ von 31 kA/m und eine Neel-Temperatur $T_N$ von $100^{\circ}$C.

Nun werden, wie in Fig. 3 dargestellt, auf eine Pappkarte 13, einer Größe von 80 x 50 mm, zwei etwa 1 mm breite Streifen 14 des hergestellten Bandes in 1 mm Abstand hintereinander und in einem größeren Abstand dazu ein 2 mm breiter Streifen 15 des Bandes aufgeklebt.

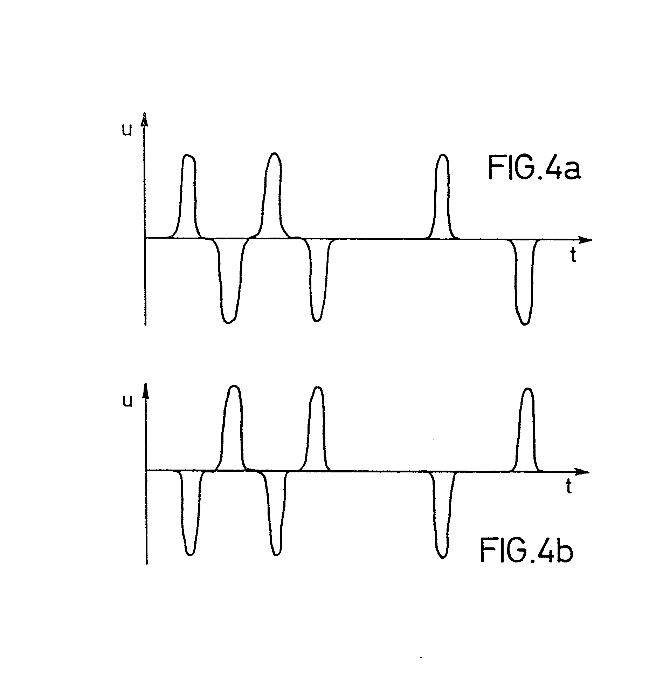

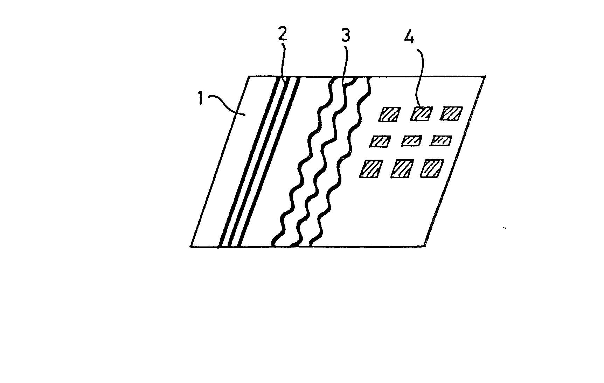

Die so erhaltene Pappkarte wird dann mit einer Geschwindigkeit von 50 mm/sec unter einer Vorrichtung gemäß Fig. 1 vorbeigeführt. Hierbei beträgt das Feld $H_1$ 100 kA/m, die Temperatur $T_2$ $110^{\circ}$C und das Wechselfeld $H_2$ hat bei einer Frequenz von 60 kHz eine Amplitude von 120 kA/m. Die Felder $H_3$ und $H_4$ entsprechen den Feldern $H_1$ und $H_2$, jedoch ist das Feld $H_3$ entgegengesetzt zum Feld $H_1$ gepolt. Die am Lesekopf 8 gemessen Signale U, aufgetragen über der Zeit t, zeigt Figur 4a, während Fig. 4b die Signale U wiedergibt, welche dann durch den nachfolgenden Lesekopf 12 ermittelt werden. Die Polung der Leseimpulse der Leseköpfe 8 und 12 ist entgegengesetzt. Die den Verfahrensschritten entsprechenden Magnetisierungszustände des magnetischen Materials (Remanenz $M_R$) sind außerdem in der Tabelle dargestellt.

Beispiel 2

Statt eines Materials mit Austauschanisotropie wird ein Eisenoxidpulver mit einer Co-Dotierung zu einem Band verarbeitet, das eine Koerzitivfeldstärke $H_c$ von 30 kA/m aufweist. Bei gleichem Aufbau der Pappkarte 13, wie in Fig. 3 und Führen durch die gleiche Vorrichtung wird bei keiner Polarität des Feldes $H_1$ ein Signal erhalten (Tabelle).

Beispiel 3

Statt eines Materials mit Austauschanisotropie wird ein Bariumferritpulver zu einem Band verarbeitet, das eine Koerzitivfeldstärke $H_c$ von 350 kA/m aufweist. Mit diesem Band wird eine Pappkarte 13 entsprechend Fig. 3 ausgerüstet. Nach dem Magnetisieren des Bariumferrit-Materials in einem Magnetfeld von 700 kA/m besitzt das Material die remanente Magnetisierung $M_R$. Wird die Pappkarte 13 nun durch die Vorrichtung gemäß Fig. 1 geführt, so findet keine Änderung des Magnetisierungszustandes statt (Tabelle) und die Polung der Signale ist nicht entgegengesetzt; die Signalfolge gemäß Fig. 4a am Lesekopf 8 wiederholt sich in gleicher Weise am Lesekopf 12.

Wird dagegen die Pappkarte mit dem Bariumferrit-Material unmagnetisiert (remanente Magnetisierung gleich Null) durch die Vorrichtung zur Echtheitsprüfung geführt, dann lassen sich keine Signale feststellen (Tabelle).

Tabelle

| | Beispiel 1 | Beispiel 2 | Beispiel 3 | |
|---|---|---|---|---|
| Koerzitivfeldstärke | $H_{CA}$ | $-H_{CA}$ | $\gg H_{CA}$ | |
| Beobachtete Eigenschaften | $M_R$ | $M_R$ | $M_R$ | |
| Ausgangswert | 0 oder $M_R$ | 0 oder $M_R$ | 0 | $M_R$ |
| Magnetisieren mit $H_1$ | $M_R$ | $M_R$ | $\simeq$ 0 | $M_R$ |
| Erwärmen auf 110°C | $M_R$ | $M_R$ | $\simeq$ 0 | $M_R$ |
| Entmagnetisieren mit $H_2$ | $\simeq$ 0,25 $M_R$ | $\simeq$ 0 | 0 | $M_R$ |
| Magnetisieren mit $H_3$ | $-M_R$ | $-M_R$ | $\simeq$ 0 | $M_R$ |
| Erwärmen auf 110°C | $-M_R$ | $-M_R$ | $\simeq$ 0 | $M_R$ |
| Entmagnetisieren mit $H_4$ | $\simeq$ -0,25 $M_R$ | $\simeq$ 0 | 0 | $M_R$ |

Patentansprüche

1.  Verfahren zur Echtheitsprüfung von Aufzeichnungsträgern, die gegen Fälschung zu sichern sind und welche mit diskreten Bereichen eines magnetischen Materials mit Austauschanisotropie, dessen Neel-Temperatur $T_N$ kleiner ist als die Curie-Temperatur $T_c$ des
    ferro- oder ferrimagnetischen Anteils, versehen
    sind, dadurch gekennzeichnet, daß man diese magnetisierbaren Bereiche des Aufzeichnungsträgers, die
    durch unmagnetische Bereiche voneinander getrennt
    sind, aufeinanderfolgend

    (a)  in einer Richtung magnetisiert,

    (b)  auf eine Temperatur $T_2$, welche kleiner $T_c$ und
         größer $T_{AFS}$ ist, erhitzt,

    (c)  auf eine Temperatur $T_1$, die kleiner $T_2$ ist,
         abkühlt,

    (d)  einem auf Null abklingenden magnetischen Wechselfeld aussetzt, dessen Feldstärke mindestens
         viermal so groß wie die Koerzitivfeldstärke
         des vorliegenden magnetischen Materials ist,
         und dann

    (e)  die Polarität der verbleibenden Magnetisierung
         bestimmt

    sowie anschließend die Schritte (a) bis (e) mit einem zu (a) entgegengesetzten Magnetisierungsvorgang
    wiederholt, mit der Maßgabe, daß die Polarität der
    verbleibenden Magnetisierung entgegengesetzt zu der
    unter (e) ermittelten festgestellt wird.

2.  Vorrichtung zur Durchführung der Echtheitsprüfung
    gemäß Anspruch 1, gekennzeichnet durch eine aufeinanderfolgende Anordnung von

(a)  Mittel zur Erzeugung eines magnetischen Gleichfeldes

(b)  Mittel zum Erwärmen von vorbeigeführten magnetischen Materialien,

(c)  Mittel zur Erzeugung eines langsam auf Null abklingenden magnetischen Wechselfeldes,

(d)  Mittel zur Bestimmung eines magnetischen Flußwechsels und

eine unmittelbar anschließende Anordnung der Mittel (a)
bis (d) in gleicher Reihenfolge.

Zeichn.

0031060

FIG.1

FIG.2

FIG.3

FIG.4a

FIG.4b

003 060

3/3

0050 / 034 184

**Europäisches Patentamt**

**EUROPÄISCHER RECHERCHENBERICHT**

Nummer der Anmeldung

EP 80 10 7659

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A/D | US - A - 3 883 892 (BASF) | 1 |
| A/D | US - A - 2 988 466 (GENERAL ELECTRIC) | 1 |
| A/D | US - A - 3 959 032 (BASF) | 1 |
| A/D | US - A - 3 961 990 (BASF) | 1 |

--------

**KLASSIFIKATION DER ANMELDUNG (Int. Cl.³)**

G 06 K 19/08
G 07 D 7/00

**RECHERCHIERTE SACHGEBIETE (Int. Cl.³)**

G 06 K 19/08
G 07 D 7/00
G 06 K 19/02
G 06 K 7/08
G 06 K 1/12

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30.03.1981 | FORLEN |

EPA form 1503.1 06.78